# EUROPEAN PATENT SPECIFICATION

(11) **EP 3 355 535 B1**
(45) Date of publication and mention of the grant of the patent: **15.04.2020**
(21) Application number: 16890972.9
(22) Date of filing: 23.02.2016
(51) Int. Cl.: H04L 12/723, H04J 14/02, H04Q 11/00

(54) **METHOD AND APPARATUS FOR ESTABLISHING INTERLAYER LINK BINDING RELATIONSHIP**
VERFAHREN UND VORRICHTUNG ZUR HERSTELLUNG VON BINDUNGSBEZIEHUNGEN VON VERBINDUNGEN ZWISCHEN SCHICHTEN
PROCÉDÉ ET APPAREIL D'ÉTABLISSEMENT DE RELATION D'ASSOCIATION DE LIAISONS INTERCOUCHES

(43) Date of publication of application: 01.08.2018
(73) Proprietor: Huawei Technologies Co., Ltd., Longgang District Shenzhen, Guangdong 518129 (CN)
(72) Inventor: FENG, Haoyu, Shenzhen Guangdong 518129 (CN)
(74) Representative: Gill Jennings & Every LLP
(86) International application number: PCT/CN2016/074338
(87) International publication number: WO 2017/143518

(56) References cited:
- WO-A2-2012/095046
- CN-A- 1 949 690
- CN-A- 101 043 271
- US-A1- 2002 109 879
- US-A1- 2014 293 798
- IYAD KATIB ET AL: "IP/MPLS-over-OTN-over-DWDM Multilayer Networks: An Integrated Three-Layer Capacity Optimization Model, a Heuristic, and a Study", IEEE TRANSACTIONS ON NETWORK AND SERVICE MANAGEMENT, IEEE, US, vol. 9, no. 3, 1 September 2012 (2012-09-01), pages 240-253, XP011459360, ISSN: 1932-4537, DOI: 10.1109/TNSM.2012.12.110124

## Description

### TECHNICAL FIELD

The present disclosure relates to the field of communications technologies, and in particular, to a method and an apparatus for establishing an inter-layer link binding relationship.

### BACKGROUND

An optical transmission network serves as a network infrastructure, and a network building requirement is increasingly higher because of driving of mobile interconnection and big data and development of a transmission network in a large-capacity direction. Particularly, a wavelength division multiplexing (Wavelength Division Multiplexing, WDM) device or an optical transport network (Optical Transport Network, OTN) device is usually selected for data transmission in a core network. As a lot of networks are built for the WDM device or the OTN device, and network structure complexity and a network scale increase, maintainability, reliability, and security of the networks need to be improved accordingly. Therefore, an automatically switched optical network (Automatically Switched Optical Network, ASON) technology is introduced to resolve the foregoing problem. The ASON technology is mainly used to separate a transport plane from a control plane in the optical transmission network, and manage and control the transport plane by using the control plane.

An OTN technology defines an optical/electrical technology architecture in the optical transmission network, and is a transmission technology based on an optical channel data unit k (OCH Data Unit k, ODUk) and an optical wavelength. The ODUk and the optical wavelength are located in two layers of independent optical transmission scheduling networks, and one optical wavelength can carry a plurality of ODUks. For example, a 100G single wavelength can carry 80 ODU0s. The ASON technology is introduced based on the OTN, so that both the optical wavelength and the ODUk have a network survivability mechanism.

According to hierarchical management and networking configuration of a WDM system, when a multiplexing link between two nodes is faulty, all ODUks carried by each wavelength in the multiplexing link are faulty. However, because each wavelength is corresponding to one optical-to-electrical conversion unit (Optical Transform Unit, OTU) board, when the multiplexing link is faulty, the transport plane needs to perform wavelength signal fault detection on each wavelength, further perform ODUk signal fault detection on each OTU board, and separately report fault alarm information to the control plane. Because the control plane processes, in a serialization manner, the alarm information reported by each OTU board, a relatively long time is required to complete a fault alarm. Consequently, fault alarm efficiency is relatively low, and subsequent service route selection may be affected.

US 2002/0109879 describes a method of providing network configuration data. The method comprises receiving a data-carrying optical signal; providing control information; modulating the data-carrying optical signal using the control information such that the optical signal carries both the data and the control information; and transmitting the modulated optical signal. It discloses an OXC control plane design approach and the control of lightpaths in optical networks (see e.g. pg. 4, [0089]). It also mentions channel addressing (see pg. 7, [0171] onwards).

### SUMMARY

Aspects of the present disclosure provide a method and an apparatus for establishing an inter-layer link binding relationship to resolve prior-art problems that fault alarm efficiency is relatively low, and subsequent service route selection may be affected. Various aspects of the present disclosure have been defined in the independent claims. Further technical features of each of these aspects have been defined in the respective dependent claims.

Based on certain aspects of the present disclosure, when the first node is the head node, the first node may determine the first link information based on routing information that is of the first LSP and that is calculated by the first node, so that efficiency of establishing the inter-layer binding relationship is improved.

In addition, after receiving a resource reservation message sent by a tail node, the head node establishes the inter-layer link binding relationship of the first LSP. The tail node may add an identifier object to the resource reservation message. This ensures that the head node establishes the inter-layer link binding relationship of the first LSP after the first LSP is successfully established.

The tail node may establish the inter-layer link binding relationship of the first LSP based on record route object information carried in the first LSP path establishment request message.

In an application scenario in which a controller does not exist, only the head node and/or the tail node may complete establishment of the inter-layer link binding relationship of the entire first LSP, and an intermediate node does not need to establish the inter-layer link binding relationship of the first LSP, so that unnecessary processing load of the intermediate node is prevented from increasing.

In an application scenario in which the controller exists, each node may establish the inter-layer link binding relationship of the first LSP, and report the inter-layer link binding relationship of the first LSP to the controller. Alternatively, only the head node and/or the tail node complete/completes establishment of the inter-layer link binding relationship of the entire first LSP, and report/reports the inter-layer link binding relationship of the entire first LSP to the controller. Alternatively, the controller calculates the routing information of the first LSP, then establishes the inter-layer link binding relationship of the first LSP, and delivers the inter-layer link binding relationship of the first LSP to each node in the first LSP.

Based on certain aspects of the present disclosure, the second LSP is an electrical-layer LSP, for example, an ODUk signal or a data packet.

Therefore, the first node associates the link identifier of the single-wavelength link with the channel identifier of the electrical-layer channel by establishing the inter-layer link binding relationship of the second LSP. This ensures that an alarm can be performed for an electrical-layer service in a timely manner when a multiplexing link is faulty.

Based on certain aspects of the present disclosure, the first node may determine whether to establish the inter-layer link binding relationship. This solution is more flexible and efficient.

Based on certain aspects of the present disclosure, the controller may obtain the inter-layer link binding relationship established by each node, and when receiving fault alarm information of a multiplexing link, the controller can determine a faulty single-wavelength link and a faulty electrical-layer channel in a timely manner, so that fault alarm efficiency is improved.

Based on certain aspects of the present disclosure, when receiving fault alarm information of a multiplexing link, the first node can determine a faulty single-wavelength link in a timely manner based on the known inter-layer link binding relationship, so that fault alarm efficiency is improved.

Based on certain aspects of the present disclosure, when receiving fault alarm information of a multiplexing link, based on the known inter-layer link binding relationship, the first node can determine a faulty single-wavelength link in a timely manner, and further determine a faulty electrical-layer channel, so that fault alarm efficiency is improved.

Based on certain aspects of the present disclosure, when the apparatus is the head node, the apparatus may determine the first link information based on routing information that is of the first LSP and that is calculated by the head node, so that efficiency of establishing the inter-layer binding relationship is improved.

Based on certain aspects of the present disclosure, the apparatus associates the link identifier of the single-wavelength link with the channel identifier of the electrical-layer channel by establishing the inter-layer link binding relationship of the second LSP. This ensures that an alarm can be performed for an electrical-layer service in a timely manner when a multiplexing link is faulty.

Based on certain aspects of the present disclosure, the apparatus may determine whether to establish the inter-layer link binding relationship. This solution is more flexible and efficient.

Based on certain aspects of the present disclosure, the controller may obtain the inter-layer link binding relationship established by each node, and when receiving fault alarm information of a multiplexing link, the controller can determine a faulty single-wavelength link and a faulty electrical-layer channel in a timely manner, so that fault alarm efficiency is improved.

Based on certain aspects of the present disclosure, when receiving fault alarm information of a multiplexing link, the apparatus can determine a faulty single-wavelength link in a timely manner based on the known inter-layer link binding relationship, so that fault alarm efficiency is improved.

Based on certain aspects of the present disclosure, when receiving fault alarm information of a multiplexing link, based on the known inter-layer link binding relationship, the apparatus can determine a faulty single-wavelength link in a timely manner, and further determine a faulty electrical-layer channel, so that fault alarm efficiency is improved.

In the aspects of the present disclosure, the first node receives the first label switched path LSP path establishment request message. The first LSP path establishment request message carries the first link information, and the first link information includes the link identifier of the single-wavelength link included in the first LSP and the link identifier of the multiplexing link included in the first LSP. The first node establishes the inter-layer link binding relationship of the first LSP. The inter-layer link binding relationship of the first LSP is the correspondence between the link identifier of the multiplexing link in the first LSP and the link identifier of the single-wavelength link in the first LSP. When a multiplexing line is faulty, the first node accurately locates a faulty single-wavelength link by querying the inter-layer link binding relationship, and performs an alarm for the faulty line in a timely manner, without relying on system and hardware overheads. In addition, the first node performs fault detection parallelization processing, so that fault alarm efficiency is improved.

### BRIEF DESCRIPTION OF DRAWINGS

FIG. 1 is a schematic diagram 1 of a network architecture according to an aspect of the present disclosure;
FIG. 2 is a schematic diagram 2 of a network architecture according to an aspect of the present disclosure;
FIG. 3 is a schematic diagram 3 of a network architecture according to an aspect of the present disclosure;
FIG. 4 is a hierarchical model diagram of an optical-electrical transmission network defined by an OTN technology according to an aspect of the present disclosure;
FIG. 5 is an overview flowchart of establishing an inter-layer link binding relationship according to an aspect of the present disclosure;
FIG. 6A and FIG. 6B are a schematic diagram of establishing an inter-layer link binding relationship according to an aspect of the present disclosure;
FIG. 7 is a schematic definition diagram of an identifier object that is carried in a PATH message and that is used to instruct to establish an inter-layer link binding relationship according to an aspect of the present disclosure;
FIG. 8 is a schematic diagram of managing each inter-layer link binding relationship by using a balanced binary tree according to an aspect of the present disclosure;
FIG. 9 is a schematic definition diagram of a message object for a fault notification message according to an aspect of the present disclosure;
FIG. 10A is a schematic diagram 1 of a link relationship between nodes according to an aspect of the present disclosure;
FIG. 10B-1 and FIG. 10B-2 are a schematic diagram of performing troubleshooting on a faulty link by a head node and a tail node according to an aspect of the present disclosure;

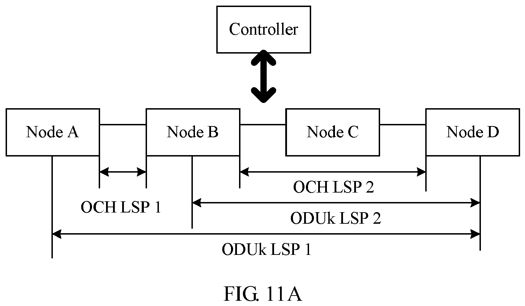

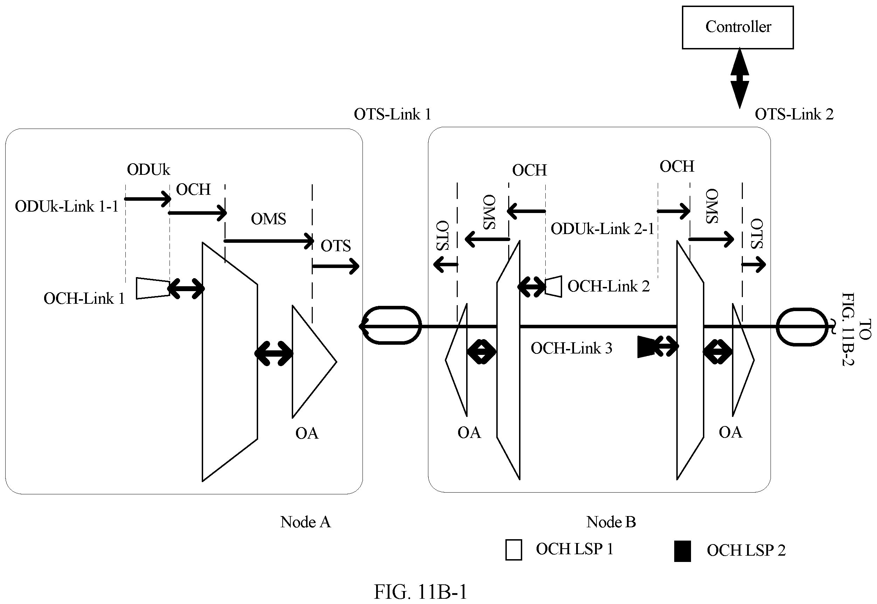

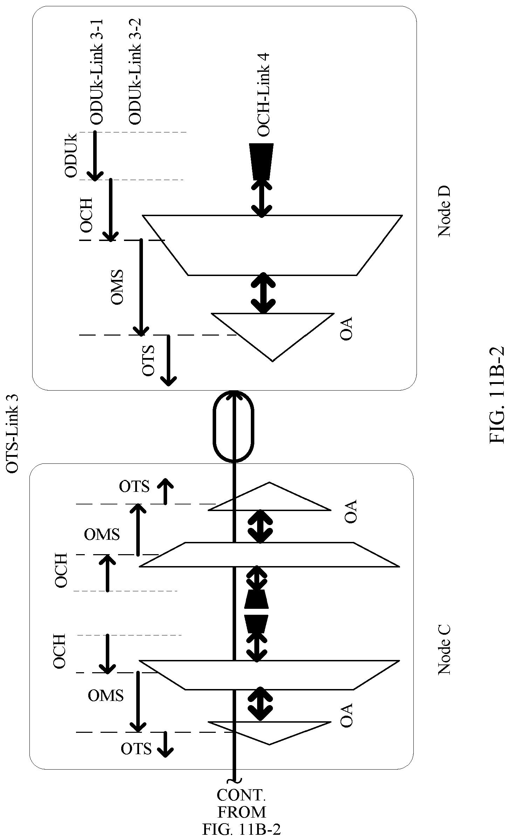

FIG. 11A is a schematic diagram 2 of a link relationship between nodes according to an aspect of the present disclosure;
FIG. 11B-1 and FIG. 11B-2 are a schematic diagram of performing troubleshooting on a faulty link by a controller according to an aspect of the present disclosure;

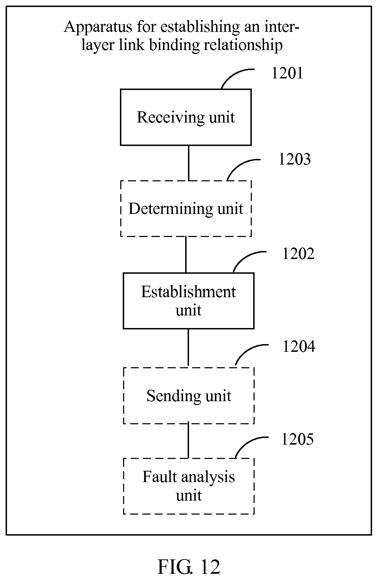

FIG. 12 is a schematic structural diagram of an apparatus for establishing an inter-layer link binding relationship according to an aspect of the present disclosure; and

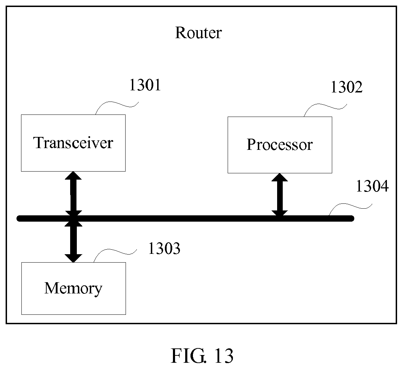

FIG. 13 is a schematic structural diagram of a router entity according to an aspect of the present disclosure.

### DESCRIPTION OF ASPECTS

Aspects of the present disclosure provide a method and an apparatus for establishing an inter-layer link binding relationship, to resolve prior-art problems that line fault alarm efficiency is relatively low, and subsequent service route selection may be affected.

The method and the apparatus are based on a same inventive concept. Because problem resolving principles of the method and the apparatus are similar, mutual reference may be made to implementation of the method and the apparatus, and details are not described repeatedly.

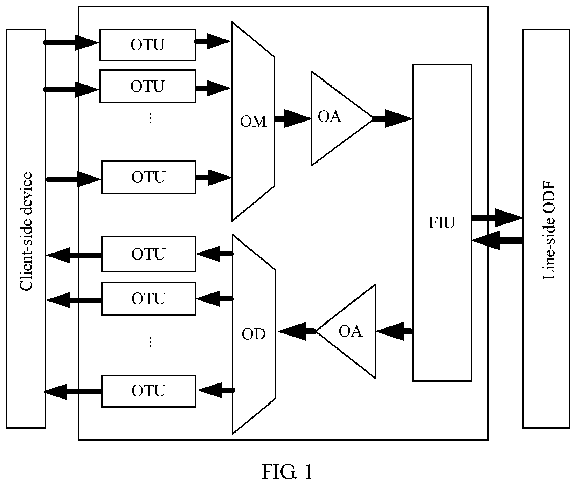

For main application scenarios of the aspects of the present disclosure, refer to FIG. 1, FIG. 2, and FIG. 3.

Referring to FIG. 1, in FIG. 1, in a transmission direction from a client side to a line side, a client-side device sends to-be-sent data to a line-side device that is an optical distribution frame (Optical Distribution Frame, ODF) by using an OTU, an optical multiplexer (Optical Multiplexer, OM) unit, an optical amplifier (optical amplifier, OA) unit, and a fiber interface unit (Fiber Interface Unit, FIU).

In a transmission direction from the line side to the client side, the ODF transmits to-be-transmitted data to the client-side device by using the FIU, the OA, an optical demultiplexing (Optical Demultiplexing, OD) unit, and the OTU.

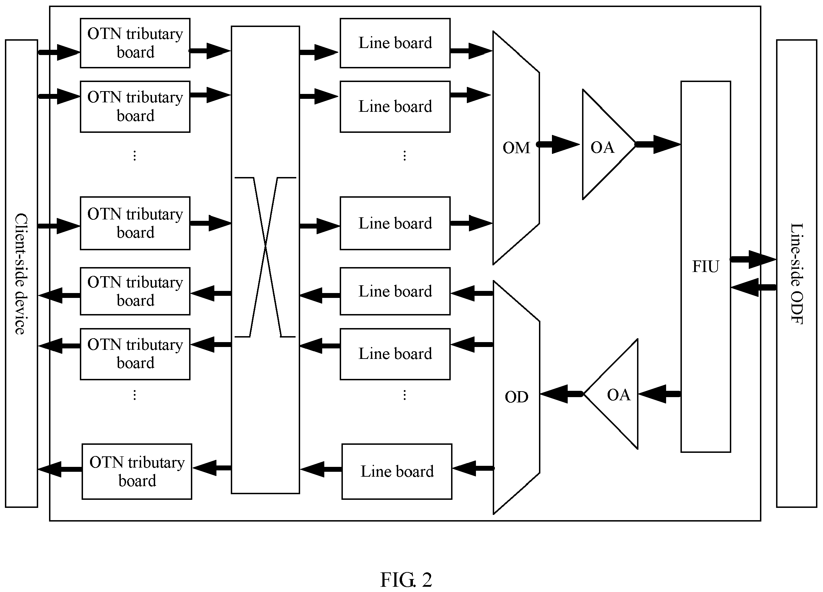

Referring to FIG. 2, a difference between FIG. 2 and FIG. 1 lies in that the OTU is replaced with a combination of an OTN tributary board, a cross-connect board, and a line board.

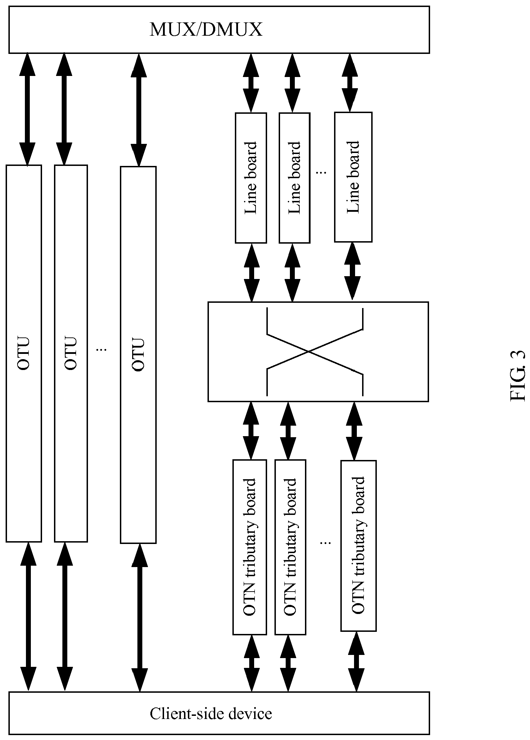

Referring to FIG. 3, in FIG. 3, features of FIG. 1 and FIG. 2 are combined. In other words, the OTU is combined with the combination of the OTN tributary board, the cross-connect board, and the line board.

An existing network architecture is merely used as an example herein, and is not limited to application scenarios shown in the foregoing three diagrams.

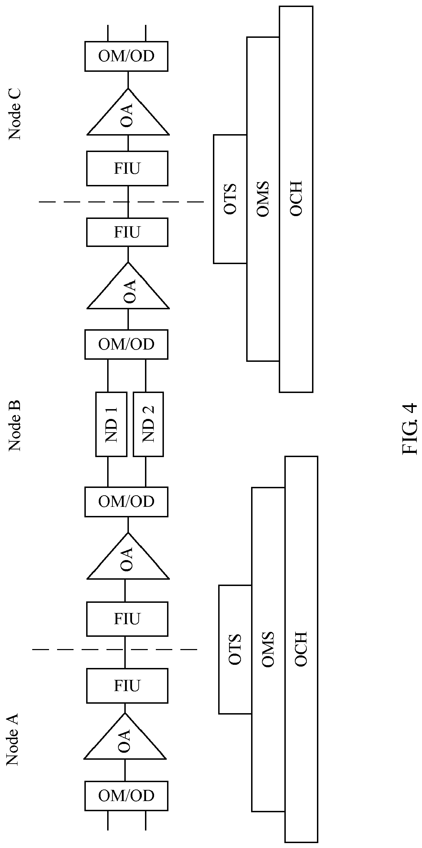

Referring to FIG. 4, an aspect of the present disclosure is mainly for a hierarchical model of an OTN.

Specifically, a range managed by an optical transmission section (Optical Transmission Section, OTS) is between input of an FIU board of a sending station and output of an FIU board of a receiving station.

A range managed by an optical multiplexing section (Optical Multiplexing Section, OMS) is between an input optical interface of a multiplexing module of the sending station to an output optical interface of a demultiplexing module of the receiving station. The multiplexing module in a WDM device, that is, an add part of an optical multiplexer and an add part of an optical add/drop multiplexer (Optical Add/Drop Multiplexer, OADM), implements a process of converting a plurality of independent signals with specific wavelengths into a multiplexed signal, namely, a multiplexing function of the OMS. The demultiplexing module in the WDM device, that is, a drop part of an optical demultiplexer and a drop part of the OADM, implements a process of converting a main channel signal into a plurality of independent signals with specific wavelengths, namely, a demultiplexing function of the OMS.

A range managed by an OCH is between a WDM side of a line board of the sending station and a WDM side of a line board of the receiving station.

The implementations of the present disclosure are described below in detail with reference to the accompanying drawings.

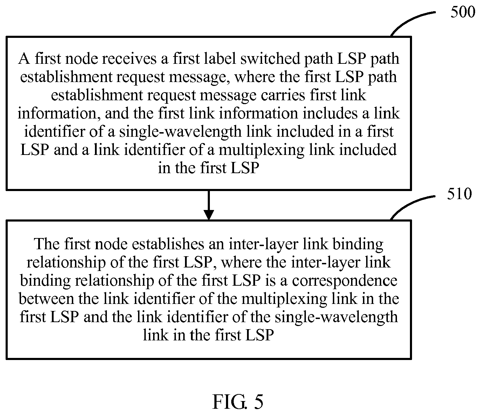

Referring to FIG. 5, an aspect of the present disclosure provides a method for establishing an inter-layer link binding relationship. The method specifically includes the following steps.

Step 500: A first node receives a first label switched path (Label Switched Path, LSP) path establishment request message, where the first LSP path establishment request message carries first link information.

The first link information includes a link identifier of a single-wavelength link included in a first LSP and a link identifier of a multiplexing link included in the first LSP. The first link information carried in the first LSP path establishment request message may include first link information of the first LSP on the first node, and may further include first link information of the first LSP on another node in the first LSP.

In addition, the first LSP path establishment request message may further carry an identifier object, and the identifier object is further used to instruct the first node to establish an inter-layer link binding relationship of the first LSP.

Step 510: The first node establishes an inter-layer link binding relationship of the first LSP.

The inter-layer link binding relationship of the first LSP is a correspondence between the link identifier of the multiplexing link in the first LSP and the link identifier of the single-wavelength link in the first LSP. The inter-layer link binding relationship that is of the first LSP and that is established by the first node may include an inter-layer link binding relationship of the first LSP on the first node, and may further include an inter-layer link binding relationship of the first LSP on another node in the first LSP. Optionally, after the first node establishes the inter-layer link binding relationship of the first LSP, the first node sends the inter-layer link binding relationship of the first LSP to a controller.

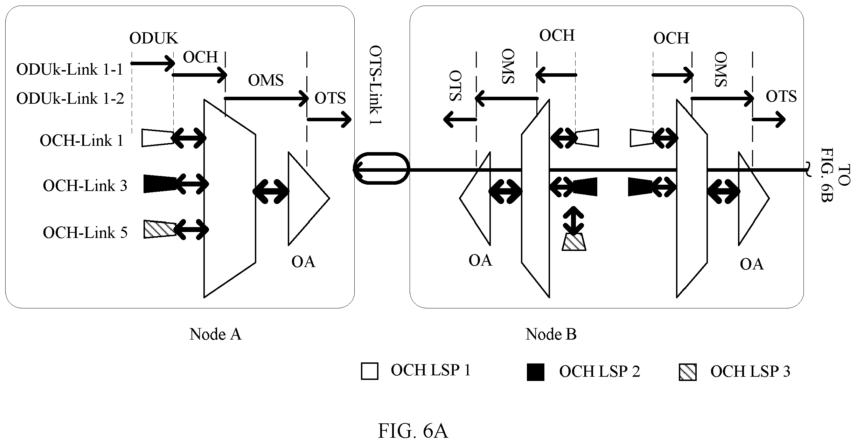

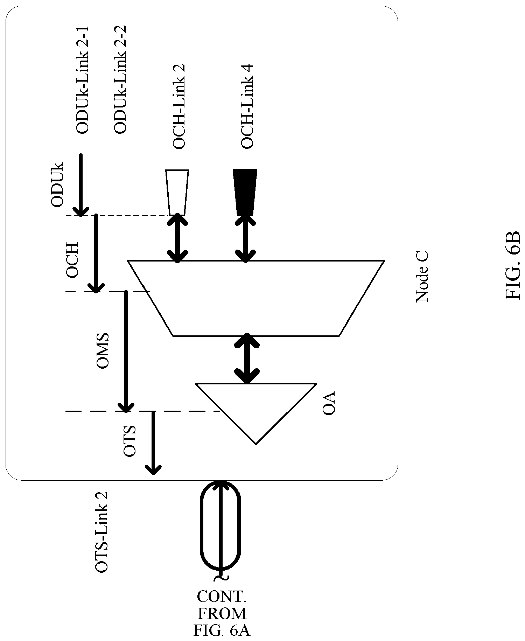

As shown in FIG. 6A and FIG. 6B, three OCH LSPs: an OCH LSP 1, an OCH LSP 2, and an OCH LSP 3 are included in the diagram.

The OCH LSP 1 includes a node A, a node B, and a node C.

Link identifiers of multiplexing links included in the OCH LSP 1 are a link identifier of a multiplexing link between the node A and the node B, that is, an OTS-Link is identified as an OTS-Link 1, and a link identifier of a multiplexing link between the node B and the node C, that is, an OTS-Link is identified as an OTS-Link 2. It should be noted that the OTS-Link herein may be alternatively an OMS-Link or a Fiber-Link. Link identifiers of single-wavelength links included in the OCH LSP 1 are a link identifier of a single-wavelength link of the node A, that is, an OCH-Link is identified as an OCH-Link 1, and a link identifier of a single-wavelength link of the node C, that is, an OCH-Link is identified as an OCH-Link 2.

The OCH LSP 2 includes the node A, the node B, and the node C.

Link identifiers of multiplexing links included in the OCH LSP 2 are the link identifier OTS-Link 1 of the multiplexing link between the node A and the node B and the link identifier OTS-Link 2 of the multiplexing link between the node B and the node C.

Link identifiers of single-wavelength links included in the OCH LSP 2 are a link identifier OCH-Link 3 of a single-wavelength link of the node A and a link identifier OCH-Link 4 of a single-wavelength link of the node C.

The OCH LSP 3 includes the node A and the node B.

A link identifier of a multiplexing link included in the OCH LSP 3 is the link identifier OTS-Link 1 of the multiplexing link between the node A and the node B. Link identifiers of single-wavelength links included in the OCH LSP 3 are a link identifier OCH-Link 5 of a single-wavelength link of the node A and a link identifier OCH-Link 6 of a single-wavelength link of the node B.

A process of establishing an inter-layer link binding relationship of a first LSP is described herein by using the OCH LSP 1 as the first LSP.

The node A receives a first LSP path establishment request message. The first LSP path establishment request message carries first link information.

The first LSP path establishment request message herein may be sent by a controller to the node A. Optionally, the node A may initiate the first LSP path establishment request message. Before initiating the first LSP path establishment request message, the node A needs to determine the first link information in the first LSP path establishment request message. The first LSP path establishment request message herein may be a PATH message.

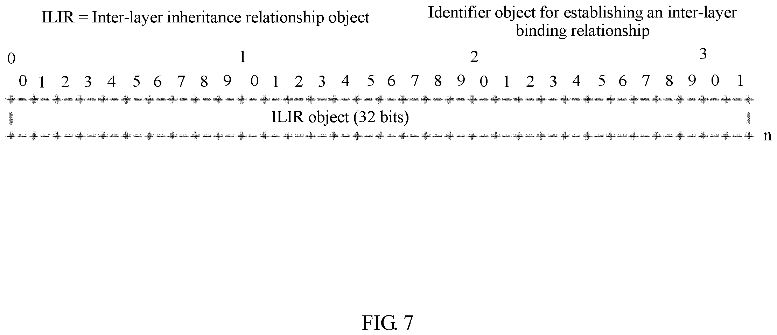

Optionally, the first LSP path establishment request message carries an identifier object, and the identifier object is used to instruct the node A to establish an inter-layer link binding relationship of the first LSP path. Referring to FIG. 7, FIG. 7 is a schematic diagram of an identifier object that is carried in a PATH message and that is used to instruct to establish an inter-layer link binding relationship.

The first link information herein may be at least two cases below:
In a first case, the first link information includes the link identifiers OTS-Link 1 and OTS-Link 2 of the multiplexing links included in the OCH LSP 1 and the link identifiers OCH-Link 1 and OCH-Link 2 of the single-wavelength links included in the OCH LSP 1. In other words, the first link information may include the link identifiers of the multiplexing links included in the entire OCH LSP 1 and the link identifiers of the single-wavelength links included in the entire OCH LSP 1.

In a second case, the first link information includes the link identifier OTS-Link 1 of the multiplexing link included in the OCH LSP 1 and the link identifiers OCH-Link 1 and OCH-Link 2 of the single-wavelength links included in the OCH LSP 1. In other words, the first link information may include a link identifier of a multiplexing link included in a part of the OCH LSP 1 and the link identifiers of the single-wavelength links, and the link identifier of the multiplexing link included in the part of the OCH LSP 1 herein is a link identifier of a multiplexing link connected to a node (for example, the node A) in the first LSP.

Therefore, for the first link information in the first case, the node A establishes an inter-layer link binding relationship of the first LSP as follows: The OTS-Link 1 is corresponding to the OCH-Link 1 and the OCH-Link 2, and the OTS-Link 2 is corresponding to the OCH-Link 1 and the OCH-Link 2.

For the first link information in the second case, the node A establishes an inter-layer link binding relationship of the first LSP as follows: The OTS-Link 1 is corresponding to the OCH-Link 1 and the OCH-Link 2.

Optionally, because the node A is a head node, the node A may calculate routing information of the first LSP, determine the first link information based on the routing information of the first LSP, and then establish the inter-layer link binding relationship of the first LSP based on the first link information.

Because the routing information that is of the OCH LSP 1 and that is calculated by the node A is routing information of the entire LSP, the first link information herein may be the first link information in the first case. Therefore, the node A establishes the inter-layer link binding relationship of the first LSP as follows: The OTS-Link 1 is corresponding to the OCH-Link 1 and the OCH-Link 2, and the OTS-Link 2 is corresponding to the OCH-Link 1 and the OCH-Link 2.

In addition, if the first LSP finally fails to be established, the head node may not establish the inter-layer link binding relationship of the first LSP. Therefore, optionally, after receiving a resource reservation (Reservation, RESV) message sent by the node C (a tail node), the node A establishes the inter-layer link binding relationship of the first LSP. Optionally, the node C may add the identifier object to the RESV message. This ensures that the node A establishes the inter-layer link binding relationship of the first LSP after the first LSP is successfully established. Optionally, after the node A establishes the inter-layer link binding relationship of the first LSP, the node A sends the inter-layer link binding relationship of the first LSP to the controller.

Then, the node B receives a first LSP path establishment request message sent by the node A or the controller. The first LSP path establishment request message carries first link information.

The first link information includes the link identifiers OTS-Link 1 and OTS-Link 2 of the multiplexing links included in the OCH LSP 1 and the link identifiers OCH-Link 1 and OCH-Link 2 of the single-wavelength links included in the OCH LSP 1. The node B is connected to the node A and the node C herein. Therefore, in this case, the first link information may include the link identifiers of the multiplexing links included in the entire OCH LSP 1 and the link identifiers of the single-wavelength links included in the entire OCH LSP 1.

Therefore, for the first link information, the node B establishes an inter-layer link binding relationship of the first LSP as follows: The OTS-Link 1 is corresponding to the OCH-Link 1 and the OCH-Link 2, and the OTS-Link 2 is corresponding to the OCH-Link 1 and the OCH-Link 2.

Optionally, after the node B establishes the inter-layer link binding relationship of the first LSP, the node B sends the inter-layer link binding relationship of the first LSP to the controller.

Finally, the node C receives a first LSP path establishment request message sent by the node B or the controller. The first LSP path establishment request message carries first link information.

Similar to the node A, the first link information herein may also include two cases:
In a first case, the first link information includes the link identifiers OTS-Link 1 and OTS-Link 2 of the multiplexing links included in the OCH LSP 1 and the link identifiers OCH-Link 1 and OCH-Link 2 of the single-wavelength links included in the OCH LSP 1.

In a second case, the first link information may include the link identifier OTS-Link 2 of the multiplexing link included in the OCH LSP 1 and the link identifiers OCH-Link 1 and OCH-Link 2 of the single-wavelength links included in the OCH LSP 1.

Therefore, for the first link information in the first case, the node C establishes an inter-layer link binding relationship of the first LSP as follows: The OTS-Link 1 is corresponding to the OCH-Link 1 and the OCH-Link 2, and the OTS-Link 2 is corresponding to the OCH-Link 1 and the OCH-Link 2.

For the first link information in the second case, the node C establishes an inter-layer link binding relationship of the first LSP as follows: The OTS-Link 2 is corresponding to the OCH-Link 1 and the OCH-Link 2.

Optionally, because the node C is the tail node, the node C may establish the inter-layer link binding relationship of the first LSP based on record route object (Record Route Object, RRO) information carried in the first LSP path establishment request message. The RRO information herein may carry the first link information in the first case.

Optionally, after the node C establishes the inter-layer link binding relationship of the first LSP, the node C sends the inter-layer link binding relationship of the first LSP to the controller.

In this case, all the nodes in the first LSP complete establishment of the inter-layer link binding relationship of the first LSP. In an actual application process, in an application scenario in which the controller does not exist, only the head node and/or the tail node may complete establishment of the inter-layer link binding relationship of the entire first LSP, and an intermediate node does not need to establish the inter-layer link binding relationship of the first LSP, so that unnecessary processing load of the intermediate node is prevented from increasing.

In an application scenario in which the controller exists, each node may establish the inter-layer link binding relationship of the first LSP, and report the inter-layer link binding relationship of the first LSP to the controller. Alternatively, only the head node and/or the tail node complete/completes establishment of the inter-layer link binding relationship of the entire first LSP, and report/reports the inter-layer link binding relationship of the entire first LSP to the controller. Alternatively, the controller calculates the routing information of the first LSP, then establishes the inter-layer link binding relationship of the first LSP, and delivers the inter-layer link binding relationship of the first LSP to each node in the first LSP.

Further, after step 510 is performed and establishment of the first LSP is completed, the first node receives a second LSP path establishment request message. The second LSP path establishment request message carries second link information.

A second LSP herein may be established based on the first LSP, or may be a combination of the first LSP and another LSP. The first LSP and the another LSP herein are optical-layer LSPs, and the second LSP is an electrical-layer LSP, for example, an ODUk signal or a data packet.

The second link information includes a link identifier of a single-wavelength link included in the second LSP and a channel identifier of an electrical-layer channel included in the second LSP.

In addition, the second LSP path establishment request message may further carry an identifier object, and the identifier object is further used to instruct the first node to establish an inter-layer link binding relationship of the second LSP.

When the first node establishes the inter-layer link binding relationship of the second LSP, it should be noted that a node establishing the inter-layer link binding relationship of the second LSP may be the head node and/or the tail node. Because the second LSP is an electrical-layer LSP, and the intermediate node performs transparent transmission, the intermediate node does not need to establish the inter-layer link binding relationship of the second LSP.

Optionally, after the first node establishes the inter-layer link binding relationship of the second LSP, the first node sends the inter-layer link binding relationship of the second LSP to the controller.

The inter-layer link binding relationship of the second LSP is a correspondence between the link identifier of the single-wavelength link in the second LSP and the channel identifier of the electrical-layer channel in the second LSP.

As shown in FIG. 6A and FIG. 6B, the OCH LSP 1 is still used as the first LSP, and two second LSPs are established based on the first LSP, for example, two ODUk LSPs: an ODUk LSP 1 and an ODUk LSP 2.

The ODUk LSP 1 includes the node A, the node B, and the node C, and the node B performs transparent transmission.

Link identifiers of single-wavelength links included in the ODUk LSP 1 are the link identifier OCH-Link 1 of the single-wavelength link of the node A and the link identifier OCH-Link 2 of the single-wavelength link of the node C.

Channel identifiers of electrical-layer channels included in the ODUk LSP 1 are a channel identifier of an electrical-layer channel of the node A, that is, an ODUk-Link is identified as an ODUk-Link 1-1, and a channel identifier of an electrical-layer channel of the node C, that is, an ODUk-Link is identified as an ODUk-Link 2-1.

The ODUk LSP 2 includes the node A, the node B, and the node C, and the node B performs transparent transmission.

Link identifiers of single-wavelength links included in the ODUk LSP 2 are the link identifier OCH-Link 1 of the single-wavelength link of the node A and the link identifier OCH-Link 2 of the single-wavelength link of the node C.

Channel identifiers of electrical-layer channels included in the ODUk LSP 2 are a channel identifier ODUk-Link 1-2 of an electrical-layer channel of the node A and a channel identifier ODUk-Link 2-2 of an electrical-layer channel of the node C.

A process of establishing an inter-layer link binding relationship of a second LSP is described herein by using the ODUk LSP 1 as the second LSP.

The node A receives a second LSP path establishment request message. The second LSP path establishment request message carries second link information.

The second LSP path establishment request message herein may be sent by the controller to the node A. Optionally, the node A may initiate the second LSP path establishment request message, and the node A needs to determine the second link information in the second LSP path establishment request message. The second LSP path establishment request message herein may be a PATH message.

Optionally, the second LSP path establishment request message carries an identifier object, and the identifier object is used to instruct the node A to establish an inter-layer link binding relationship of the second LSP.

The second link information herein may be at least two cases below:
In a first case, the second link information includes the link identifiers OCH-Link 1 and OCH-Link 2 of the single-wavelength links included in the ODUk LSP 1 and the channel identifiers ODUk-Link 1-1 and ODUk-Link 2-1 of the electrical-layer channels included in the ODUk LSP 1. In other words, the second link information in the first case may include the link identifiers of the single-wavelength links included in the entire ODUk LSP 1 and the channel identifiers of the electrical-layer channels included in the entire ODUk LSP 1.

In a second case, the second link information includes the link identifier OCH-Link 1 of the single-wavelength link included in the ODUk LSP 1 and the channel identifier ODUk-Link 1-1 of the electrical-layer channel included in the ODUk LSP 1. In other words, the second link information in the second case may include a link identifier of a single-wavelength link included in a part of the ODUk LSP 1 and a channel identifier of an electrical-layer channel included in the part of the ODUk LSP 1. The link identifier of the single-wavelength link included in the part of the ODUk LSP 1 herein is a link identifier of a single-wavelength link of a node (for example, the node A) in the second LSP. The channel identifier of the electrical-layer channel included in the part of the ODUk LSP 1 herein is a channel identifier of an electrical-layer channel of a node (for example, the node A) in the second LSP.

Therefore, for the second link information in the first case, the node A establishes an inter-layer link binding relationship of the second LSP as follows: The OCH-Link 1 is corresponding to the ODUk-Link 1-1, and the OCH-Link 2 is corresponding to the ODUk-Link 2-1.

For the second link information in the second case, the node A establishes an inter-layer link binding relationship of the second LSP as follows: The OCH-Link 1 is corresponding to the ODUk-Link 1-1.

Similarly, because the node A is the head node, the node A may calculate routing information of the second LSP, determine the second link information based on the routing information of the second LSP, and then establish the inter-layer link binding relationship of the second LSP based on the second link information.

Routing information that is of the ODUk LSP 1 and that is calculated by the node A is routing information of the entire LSP. Therefore, the second link information herein is the second link information in the first case. Therefore, the node A establishes the inter-layer link binding relationship of the second LSP as follows: The OCH-Link 1 is corresponding to the ODUk-Link 1-1, and the OCH-Link 2 is corresponding to the ODUk-Link 2-1.

In addition, if the second LSP finally fails to be established, the head node may not establish the inter-layer link binding relationship of the second LSP. Therefore, optionally, after receiving a resource reservation (Reservation, RESV) message sent by the node C (the tail node), the node A establishes the inter-layer link binding relationship of the second LSP. Optionally, the node C may add the identifier object to the RESV message. This ensures that the node A establishes the inter-layer link binding relationship of the second LSP after the second LSP is successfully established.

Optionally, after the node A establishes the inter-layer link binding relationship of the second LSP, the node A sends the inter-layer link binding relationship of the second LSP to the controller.

The node C receives a second LSP path establishment request message sent by the node B or the controller. The second LSP path establishment request message carries second link information.

Similar to the node A, the second link information herein may also include two cases: In a first case, the second link information includes the link identifiers OCH-Link 1 and OCH-Link 2 of the single-wavelength links included in the ODUk LSP 1 and the channel identifiers ODUk-Link 1-1 and ODUk-Link 2-1 of the electrical-layer channels included in the ODUk LSP 1.

In a second case, the second link information includes the link identifier OCH-Link 2 of the single-wavelength link included in the ODUk LSP 1 and the channel identifier ODUk-Link 2-1 of the electrical-layer channel included in the ODUk LSP 1.

Therefore, for the second link information in the first case, the node C establishes an inter-layer link binding relationship of the second LSP as follows: The OCH-Link 1 is corresponding to the ODUk-Link 1-1, and the OCH-Link 2 is corresponding to the ODUk-Link 2-1.

For the second link information in the second case, the node C establishes an inter-layer link binding relationship of the second LSP as follows: The OCH-Link 2 is corresponding to the ODUk-Link 2-1.

Optionally, because the node C is the tail node, the node C may establish the inter-layer link binding relationship of the second LSP based on record route object (Record Route Object, RRO) information carried in the second LSP path establishment request message. The RRO information herein may carry the second link information in the first case.

Optionally, after the node C establishes the inter-layer link binding relationship of the second LSP, the node C sends the inter-layer link binding relationship of the second LSP to the controller.

In this case, both the head node and the tail node in the entire second LSP complete establishment of the inter-layer link binding relationship of the second LSP. In an actual application process, in an application scenario in which the controller does not exist, only the head node and/or the tail node may complete establishment of the inter-layer link binding relationship of the entire second LSP.

In an application scenario in which the controller exists, the head node and the tail node may separately establish the inter-layer link binding relationship of the second LSP, and separately report the inter-layer link binding relationship of the second LSP to the controller. Alternatively, only the head node and/or the tail node complete/completes establishment of the inter-layer link binding relationship of the entire second LSP, and report/reports the inter-layer link binding relationship of the entire second LSP to the controller. Alternatively, the controller calculates the routing information of the second LSP, then establishes the inter-layer link binding relationship of the second LSP, and delivers the inter-layer link binding relationship of the second LSP to each node in the second LSP.

In addition, after the first node establishes the inter-layer link binding relationship of the first LSP, if the first node determines that a multiplexing link in the first LSP is faulty, the first node further determines a link identifier of the faulty multiplexing link.

A multiplexing link between the first node and a connected node that are in the first LSP may be faulty herein. In this case, the first node directly detects the faulty multiplexing link and determines a link identifier of the faulty multiplexing link. Alternatively, the first node receives a fault notification message sent by another node in the first LSP. The message carries a link identifier of a faulty multiplexing link.

In this case, if the multiplexing link between the first node and the connected node that are in the first LSP is faulty, the first node directly determines, based on the inter-layer link binding relationship of the first LSP, a link identifier that is of a single-wavelength link and that is corresponding to the link identifier of the faulty multiplexing link.

If the first node receives the fault notification message sent by the another node in the first LSP, and the inter-layer link binding relationship that is of the first LSP and that is established by the first node is the inter-layer link binding relationship of the entire first LSP, the first node may determine a link identifier that is of a single-wavelength link and that is corresponding to the link identifier of the faulty multiplexing link.

If the controller stores the inter-layer link binding relationship of the first LSP, when receiving a fault notification message sent by a node in the first LSP, the controller determines a link identifier that is of a single-wavelength link and that is corresponding to a link identifier of a faulty multiplexing link.

Further, after the first node establishes the inter-layer link binding relationship of the second LSP, the first node determines, based on the inter-layer link binding relationship of the second LSP and the link identifier that is of the single-wavelength link and that is corresponding to the link identifier of the faulty multiplexing link, a channel identifier that is of an electrical-layer channel and that is corresponding to a link identifier of each single-wavelength link.

When the first node is the head node and/or the tail node, if the first node establishes the inter-layer link binding relationship of the entire second LSP, the first node determines, based on the inter-layer link binding relationship of the second LSP and the determined link identifier that is of the single-wavelength link and that is corresponding to the link identifier of the faulty multiplexing link, the channel identifier that is of the electrical-layer channel and that is corresponding to the link identifier of each single-wavelength link.

When the first node is the head node and/or the tail node, if the first node establishes only an inter-layer link binding relationship of a part of the second LSP, the first node can determine only a channel identifier that is of an electrical-layer channel and that is corresponding to a link identifier of a part of a single-wavelength link.

If the controller stores the inter-layer link binding relationship of the second LSP, when receiving a fault notification message sent by a node in the second LSP, the controller determines a link identifier that is of a single-wavelength link and that is corresponding to a link identifier of a faulty multiplexing link, and a channel identifier that is of an electrical-layer channel and that is corresponding to a link identifier of each single-wavelength link.

For example, as shown in FIG. 6A and FIG. 6B, both the node A and the node C establish inter-layer link binding relationships of the entire OCH LSP 1, the entire ODUk LSP 1, and the entire ODUk LSP 2.

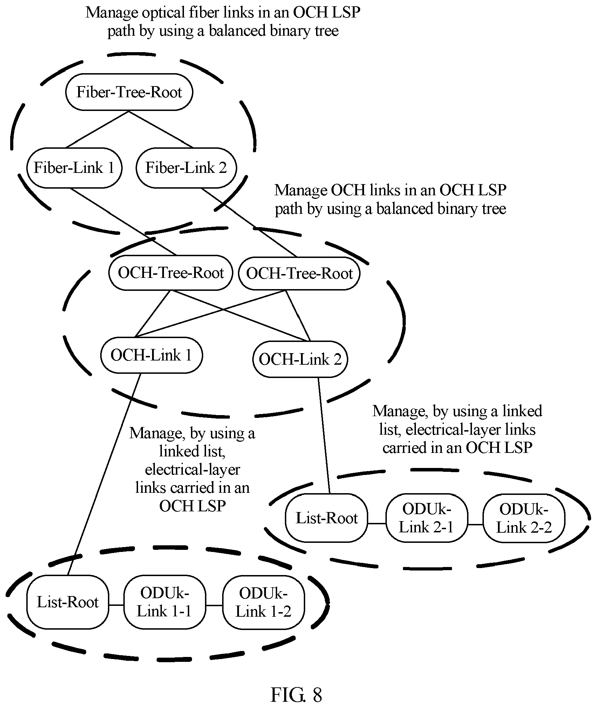

As shown in FIG. 8, an OTS-Link 1 is corresponding to an OCH-Link 1 and an OCH-Link 2, an OTS-Link 2 is corresponding to the OCH-Link 1 and the OCH-Link 2, the OCH-Link1 is corresponding to an OCH-Link 1-1 and an ODUk-Link 1-2, and the OCH-Link 2 is corresponding to an ODUk-Link 2-1 and an ODUk-Link 2-2. When the OTS-Link 1 between a node A and a node B is faulty, the node A detects a faulty multiplexing link, determines that a link identifier of the faulty multiplexing link is the OTS-Link 1, and further determines, based on an inter-layer link binding relationship shown in FIG. 8, that the OTS-Link 1 is corresponding to the OCH-Link 1 and the OCH-Link 2, the OCH-Link 1 is corresponding to the ODUk-Link 1-1 and the ODUk-Link 1-2, and the OCH-Link 2 is corresponding to the ODUk-Link 2-1 and the ODUk-Link 2-2.

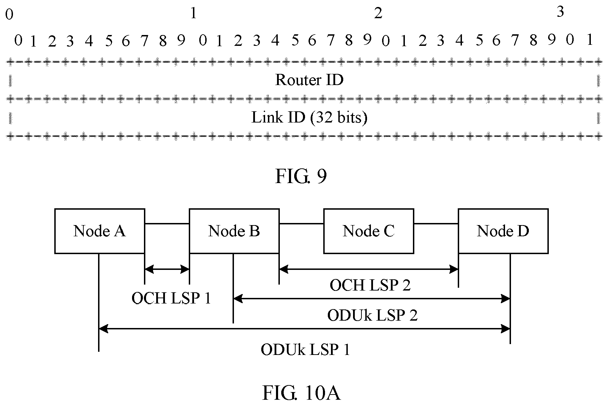

When detecting that the OTS-Link 1 is faulty, the node B sends a fault notification message to a node C, and the fault notification message carries a router identity (Router ID) and a multiplexing link identifier (Link ID): the node B and the OTS-Link 1, as shown in FIG. 9. The node C determines, based on the inter-layer link binding relationship shown in FIG. 8, that the OTS-Link 1 is corresponding to the OCH-Link 1 and the OCH-Link 2, the OCH-Link 1 is corresponding to the ODUk-Link 1 and the ODUk-Link 2, and the OCH-Link 2 is corresponding to the ODUk-Link 2-1 and the ODUk-Link 2-2.

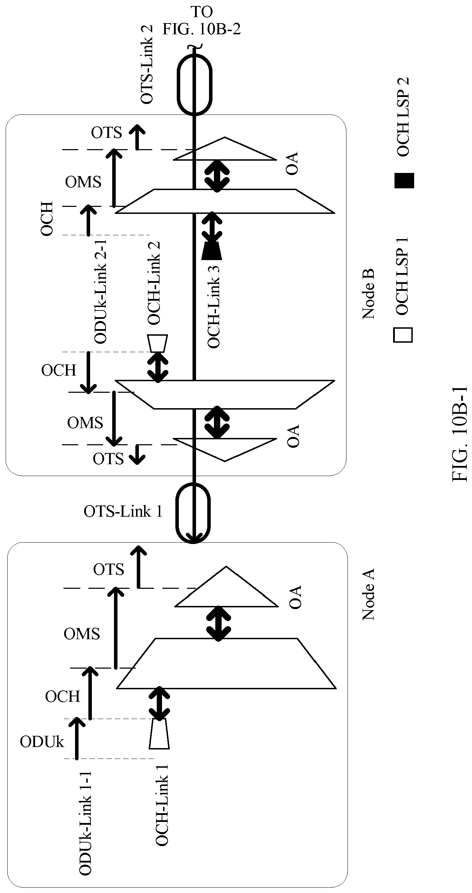

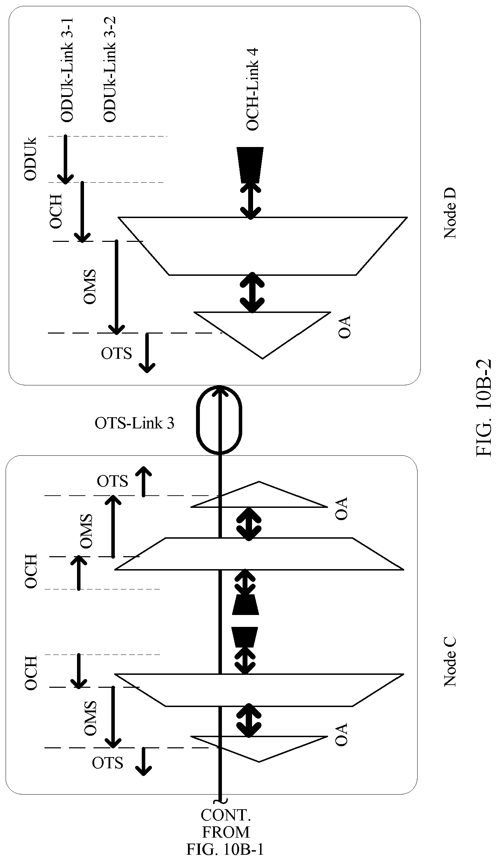

For another example, refer to FIG. 10A, FIG. 10B-1, and FIG. 10B-2.

An OCH LSP 1 includes a node A and a node B, and an OCH LSP 2 includes the node B, a node C, and a node D.

An ODUk LSP 1 includes the node A, the node B, the node C, and the node D, and an ODUk LSP 2 includes the node B, the node C, and the node D.

When the OCH LSP 1 is established, the node A and the node B establish an inter-layer link binding relationship of the OCH LSP 1. An OTS-Link 1 is corresponding to an OCH-Link 1 and an OCH-Link 2.

When the OCH LSP 2 is established, the node B and the node D establish an inter-layer link binding relationship of the OCH LSP 2. An OTS-Link 2 is corresponding to an OCH-Link 3 and an OCH-Link 4, and an OTS-Link 3 is corresponding to the OCH-Link 3 and the OCH-Link 4.

When the ODUk LSP 1 is established, the node A and the node D establish an inter-layer link binding relationship of the ODUk LSP 1. The OCH-Link 1 is corresponding to an ODUk-Link 1-1, and the OCH-Link 4 is corresponding to an ODUk-Link 3-1.

When the ODUk LSP 2 is established, the node B and the node D establish an inter-layer link binding relationship of the ODUk LSP 2. The OCH-Link 3 is corresponding to an ODUk-Link 2-1, and the OCH-Link 4 is corresponding to an ODUk-Link 3-2.

When a fiber disconnection fault occurs between the node C and the node D, the node C and the node D send a fault notification message to head nodes and tail nodes of the OCH LSP 1 and the OCH LSP 2: the node A, the node B, and the node D.

The node D determines, based on the established inter-layer link binding relationship, that the OTS-Link 3 is corresponding to the OCH-Link 3 and the OCH-Link 4, the OCH-Link 3 is corresponding to the ODUk-Link 2-1, and the OCH-Link 4 is corresponding to the ODUk-Link 3-1, and reports an electrical-layer service alarm, that is, an alarm for the ODUk LSP 1 and the ODUk LSP 2.

As shown in FIG. 11A, FIG. 11B-1, and FIG. 11B-2, if a controller stores the foregoing inter-layer link binding relationship, when receiving an alarm message for a fiber disconnection fault between a node C and a node D, the controller determines that an OTS-Link 3 is corresponding to an OCH-Link 3 and an OCH-Link 4, an OCH-Link 3 is corresponding to an ODUk-Link 2-1, and an OCH-Link 4 is corresponding to an ODUk-Link 3-1, and determines that a service fault occurs in an ODUk LSP 1 and an ODUk LSP 2.

Referring to FIG. 12, an aspect of the present disclosure provides an apparatus for establishing an inter-layer link binding relationship. The apparatus includes:
a receiving unit 1201, configured to receive a first LSP path establishment request message, where the first LSP path establishment request message carries first link information, and
the first link information includes a link identifier of a single-wavelength link included in a first LSP and a link identifier of a multiplexing link included in the first LSP; and
an establishment unit 1202, configured to establish an inter-layer link binding relationship of the first LSP, where
the inter-layer link binding relationship of the first LSP is a correspondence between the link identifier of the multiplexing link in the first LSP and the link identifier of the single-wavelength link in the first LSP.

Optionally, the apparatus further includes:
a determining unit 1203, configured to: before the inter-layer link binding relationship of the first LSP is established, determine the first link information if the apparatus is a head node.

Optionally, the receiving unit 1201 is further configured to receive a second LSP path establishment request message. The second LSP path establishment request message carries second link information.

The second link information includes a link identifier of a single-wavelength link included in a second LSP and a channel identifier of an electrical-layer channel included in the second LSP.

The establishment unit 1202 is further configured to establish an inter-layer link binding relationship of the second LSP.

The inter-layer link binding relationship of the second LSP is a correspondence between the link identifier of the single-wavelength link in the second LSP and the channel identifier of the electrical-layer channel in the second LSP.

Optionally, the first LSP path establishment request message carries an identifier object, and the identifier object is used to instruct the apparatus to establish the inter-layer link binding relationship of the first LSP and/or instruct the apparatus to establish the inter-layer link binding relationship of the second LSP.

Optionally, the apparatus further includes:
a sending unit 1204, configured to: after the apparatus establishes the inter-layer link binding relationship of the first LSP, send the inter-layer link binding relationship of the first LSP and/or the inter-layer link binding relationship of the second LSP to a controller.

Optionally, the apparatus further includes:
a fault analysis unit 1205, configured to: after the apparatus establishes the inter-layer link binding relationship of the first LSP, determine that a multiplexing link in the first LSP is faulty, and determine a link identifier of the faulty multiplexing link; and
determine, based on the inter-layer link binding relationship of the first LSP, a link identifier that is of at least one single-wavelength link and that is corresponding to the link identifier of the faulty multiplexing link.

Optionally, the fault analysis unit 1205 is further configured to: after the apparatus establishes the inter-layer link binding relationship of the second LSP, determine, based on the inter-layer link binding relationship of the second LSP and the link identifier that is of the single-wavelength link and that is corresponding to the link identifier of the faulty multiplexing link, a channel identifier that is of at least one electrical-layer channel and that is corresponding to a link identifier of each single-wavelength link.

It should be noted that division of modules in the aspects of the present disclosure is an example, and is merely logical function division. There may be another division manner in actual implementation. In addition, functional modules in the aspects of this application may be integrated into one processing module, or each module may exist alone physically, or two or more modules may be integrated into one module. The integrated module may be implemented in a form of hardware, or may be implemented in a form of a software function module.

When the integrated module is implemented in the form of a software functional module and sold or used as an independent product, the integrated unit may be stored in a computer readable storage medium. Based on such an understanding, the technical solutions of this application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor (processor) to perform all or some steps of the methods described in the aspects of this application.

The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

An aspect of the present disclosure further provides a router. As shown in FIG. 13, FIG. 13 is a schematic structural diagram of a router according to an aspect of the present disclosure. The device includes a transceiver 1301, a processor 1302, and a memory 1303. The transceiver 1301, the processor 1302, and the memory 1303 are interconnected. This aspect of the present disclosure imposes no limitation on a specific connection medium between the parts. In this aspect of the present disclosure, in FIG. 13, the memory 1303, the processor 1302, and the transceiver 1301 are connected by using a bus 1304, and the bus is represented by a bold line in FIG. 13. A connection manner between other parts is merely an example for description, and does not impose a limitation. The bus may include an address bus, a data bus, a control bus, and the like. For ease of representation, only one bold line is used in FIG. 13 for representation, but it does not indicate that there is only one bus or one type of bus.

The transceiver 1301 is configured to receive a first LSP path establishment request message. The first LSP path establishment request message carries first link information.

The first link information includes a link identifier of a single-wavelength link included in a first LSP and a link identifier of a multiplexing link included in the first LSP.

The processor 1302 is configured to establish an inter-layer link binding relationship of the first LSP.

The inter-layer link binding relationship of the first LSP is a correspondence between the link identifier of the multiplexing link in the first LSP and the link identifier of the single-wavelength link in the first LSP.

Optionally, the processor 1302 is further configured to: before establishing the inter-layer link binding relationship of the first LSP, determine the first link information if the apparatus is a head node.

Optionally, the transceiver 1301 is further configured to receive a second LSP path establishment request message. The second LSP path establishment request message carries second link information.

The second link information includes a link identifier of a single-wavelength link included in a second LSP and a channel identifier of an electrical-layer channel included in the second LSP.

The processor 1302 is further configured to establish an inter-layer link binding relationship of the second LSP.

The inter-layer link binding relationship of the second LSP is a correspondence between the link identifier of the single-wavelength link in the second LSP and the channel identifier of the electrical-layer channel in the second LSP.

Optionally, the first LSP path establishment request message carries an identifier object, and the identifier object is used to instruct the apparatus to establish the inter-layer link binding relationship of the first LSP and/or instruct the apparatus to establish the inter-layer link binding relationship of the second LSP.

Optionally, the transceiver 1301 is further configured to: after the apparatus establishes the inter-layer link binding relationship of the first LSP, send the inter-layer link binding relationship of the first LSP and/or the inter-layer link binding relationship of the second LSP to a controller.

Optionally, the processor 1302 is further configured to: after the apparatus establishes the inter-layer link binding relationship of the first LSP, determine that a multiplexing link in the first LSP is faulty, and determine a link identifier of the faulty multiplexing link; and
determine, based on the inter-layer link binding relationship of the first LSP, a link identifier that is of at least one single-wavelength link and that is corresponding to the link identifier of the faulty multiplexing link.

Optionally, the processor 1302 is further configured to: after the apparatus establishes the inter-layer link binding relationship of the second LSP, determine, based on the inter-layer link binding relationship of the second LSP and the link identifier that is of the single-wavelength link and that is corresponding to the link identifier of the faulty multiplexing link, a channel identifier that is of at least one electrical-layer channel and that is corresponding to a link identifier of each single-wavelength link.

The memory 1303 in this aspect of the present disclosure is configured to store program code executed by the processor 1302, and may be a volatile memory (English: volatile memory), for example, a random access memory (English: random access memory, RAM for short); the memory 1303 may be a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short); or the memory 1303 is any other medium that can be used to carry or store expected program code in an instruction or data structure form and can be accessed by a computer. However, the memory 1303 is not limited thereto. The memory 1303 may be a combination of the memories.

The processor 1302 in this aspect of the present disclosure may be a central processing unit (English: central processing unit, CPU for short).

In view of the above, in the method provided in the aspects of the present disclosure, the first node establishes an inter-layer link binding relationship, and when a multiplexing line is faulty, the first node accurately locates a faulty single-wavelength link by querying the inter-layer link binding relationship, further locates a faulty electrical-layer channel, and performs an alarm for the faulty line in a timely manner, without relying on system and hardware overheads. In addition, the first node performs electrical-layer fault detection parallelization processing, so that fault alarm efficiency is improved.

A person skilled in the art should understand that the aspects of the present disclosure may be provided as a method, a system, or a computer program product. Therefore, the present disclosure may use a form of hardware only aspects, software only aspects, or aspects with a combination of software and hardware. Moreover, the present disclosure may use a form of a computer program product that is implemented on one or more computer-usable storage media (including but not limited to a disk memory, a CD-ROM, an optical memory, and the like) that include computer-usable program code.

The present disclosure is described with reference to the flowcharts and/or block diagrams of the method, the device (system), and the computer program product according to the aspects of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred aspects of the present disclosure have been described, a person skilled in the art can make changes and modifications to these aspects once they learn the basic inventive concept. Therefore, the following claims are intended to be construed as to cover the preferred aspects and all changes and modifications falling within the scope of the present disclosure.

Obviously, a person skilled in the art can make various modifications and variations to the aspects of the present disclosure without departing from the scope of the aspects of the present disclosure. The present disclosure is intended to cover these modifications and variations provided that they fall within the scope of protection defined by the following claims.

## Claims

1. A method for establishing an inter-layer link binding relationship, comprising:
receiving (500), by a first node, a first label switched path, LSP, path establishment request message, wherein the first LSP path establishment request message carries first link information, and
the first link information comprises a link identifier of a single-wavelength link comprised in a first LSP and a link identifier of a multiplexing link comprised in the first LSP; and
establishing (510), by the first node, an inter-layer link binding relationship of the first LSP, wherein
the inter-layer link binding relationship of the first LSP is a correspondence between the link identifier of the multiplexing link in the first LSP and the link identifier of the single-wavelength link in the first LSP;
the method further comprising:
receiving, by the first node, a second LSP path establishment request message, wherein the second LSP path establishment request message carries second link information, and
the second link information comprises a link identifier of a single-wavelength link comprised in a second LSP and a channel identifier of an electrical-layer channel comprised in the second LSP; and
establishing, by the first node, an inter-layer link binding relationship of the second LSP, wherein
the inter-layer link binding relationship of the second LSP is a correspondence between the link identifier of the single-wavelength link in the second LSP and the channel identifier of the electrical-layer channel in the second LSP.

2. The method according to claim 1, before the establishing, by the first node, an inter-layer link binding relationship of the first LSP, the method further comprises:
determining, by the first node, the first link information if the first node is a head node.

3. The method according to claim 1, wherein the first LSP path establishment request message carries an identifier object, and the identifier object is used to instruct the first node to establish the inter-layer link binding relationship of the first LSP and/or instruct the first node to establish the inter-layer link binding relationship of the second LSP.

4. The method according to any one of claims 1 to 3, further comprising:
after the first node establishes the inter-layer link binding relationship of the first LSP, sending, by the first node, the inter-layer link binding relationship of the first LSP and/or the inter-layer link binding relationship of the second LSP to a controller.

5. The method according to claim 1 or 2, after the establishing, by the first node, an inter-layer link binding relationship of the first LSP, the method further comprises:
determining, by the first node, that a multiplexing link in the first LSP is faulty, and determining a link identifier of the faulty multiplexing link; and
determining, by the first node based on the inter-layer link binding relationship of the first LSP, a link identifier that is of at least one single-wavelength link and that is corresponding to the link identifier of the faulty multiplexing link.

6. The method according to claim 5, after the establishing, by the first node, an inter-layer link binding relationship of the second LSP, the method further comprises:
determining, by the first node based on the inter-layer link binding relationship of the second LSP and the link identifier that is of the single-wavelength link and that is corresponding to the link identifier of the faulty multiplexing link, a channel identifier that is of at least one electrical-layer channel and that is corresponding to a link identifier of each single-wavelength link.

7. An apparatus for establishing an inter-layer link binding relationship, comprising:
a receiving unit (1201), configured to receive a first label switched path, LSP, path establishment request message, wherein the first LSP path establishment request message carries first link information, and
the first link information comprises a link identifier of a single-wavelength link comprised in a first LSP and a link identifier of a multiplexing link comprised in the first LSP; and
an establishment unit (1202), configured to establish an inter-layer link binding relationship of the first LSP, wherein
the inter-layer link binding relationship of the first LSP is a correspondence between the link identifier of the multiplexing link in the first LSP and the link identifier of the single-wavelength link in the first LSP;
wherein the receiving unit is further configured to receive a second LSP path establishment request message, wherein the second LSP path establishment request message carries second link information, and
the second link information comprises a link identifier of a single-wavelength link comprised in a second LSP and a channel identifier of an electrical-layer channel comprised in the second LSP; and
the establishment unit is further configured to establish an inter-layer link binding relationship of the second LSP, wherein
the inter-layer link binding relationship of the second LSP is a correspondence between the link identifier of the single-wavelength link in the second LSP and the channel identifier of the electrical-layer channel in the second LSP.

8. The apparatus according to claim 7, wherein the apparatus further comprises:
a determining unit (1203), configured to: before the inter-layer link binding relationship of the first LSP is established, determine the first link information if the apparatus is a head node.

9. The apparatus according to claim 7, wherein the first LSP path establishment request message carries an identifier object, and the identifier object is used to instruct the apparatus to establish the inter-layer link binding relationship of the first LSP and/or instruct the apparatus to establish the inter-layer link binding relationship of the second LSP.

10. The apparatus according to any one of claims 7 to 9, wherein the apparatus further comprises:
a sending unit (1204), configured to: after the apparatus establishes the inter-layer link binding relationship of the first LSP, send the inter-layer link binding relationship of the first LSP and/or the inter-layer link binding relationship of the second LSP to a controller.

11. The apparatus according to claim 7 or 8, wherein the apparatus further comprises:
a fault analysis unit (1205), configured to: after the apparatus establishes the inter-layer link binding relationship of the first LSP, determine that a multiplexing link in the first LSP is faulty, and determine a link identifier of the faulty multiplexing link; and
determine, based on the inter-layer link binding relationship of the first LSP, a link identifier that is of at least one single-wavelength link and that is corresponding to the link identifier of the faulty multiplexing link.

12. The apparatus according to claim 11, wherein the fault analysis unit is further configured to: after the apparatus establishes the inter-layer link binding relationship of the second LSP, determine, based on the inter-layer link binding relationship of the second LSP and the link identifier that is of the single-wavelength link and that is corresponding to the link identifier of the faulty multiplexing link, a channel identifier that is of at least one electrical-layer channel and that is corresponding to a link identifier of each single-wavelength link.

## Patentansprüche

1. Verfahren zur Herstellung einer Bindungsbeziehung von Verbindungen zwischen Schichten, umfassend: Empfangen (500), durch einen ersten Knoten, einer ersten Pfadherstellungs-Anforderungsnachricht eines "Label Switched Path", LSP, wobei die erste LSP-Pfadherstellungs-Anforderungsnachricht erste Verbindungsinformationen trägt, und
die ersten Verbindungsinformationen eine Verbindungskennung einer Einzelwellenlängen-Verbindung, die in einem ersten LSP enthalten ist, und eine Verbindungskennung einer Multiplexierungsverbindung, die in dem ersten LSP enthalten ist, umfassen; und
Herstellen (510), durch den ersten Knoten, einer Bindungsbeziehung, des ersten LSP, von Verbindungen zwischen Schichten, wobei
die Bindungsbeziehung, des ersten LSP, von Verbindungen zwischen Schichten, eine Entsprechung zwischen der Verbindungskennung der Multiplexierungsverbindung in dem ersten LSP und der Verbindungskennung der Einzelwellenlängen-Verbindung in dem ersten LSP ist;
das Verfahren ferner umfassend:
Empfangen, durch den ersten Knoten, einer zweiten LSP-Pfadherstellungs-Anforderungsnachricht, wobei die zweite LSP-Pfadherstellungs-Anforderungsnachricht zweite Verbindungsinformationen trägt, und
die zweiten Verbindungsinformationen eine Verbindungskennung einer Einzelwellenlängen-Verbindung, die in einem zweiten LSP enthalten ist, und eine Kanalkennung eines Kanals einer elektrischen Schicht, der in dem zweiten LSP enthalten ist, umfassen; und
Herstellen, durch den ersten Knoten, einer Bindungsbeziehung, des zweiten LSP, von Verbindungen zwischen Schichten, wobei
die Bindungsbeziehung, des zweiten LSP, von Verbindungen zwischen Schichten eine Entsprechung zwischen der Verbindungskennung der Einzelwellenlängen-Verbindung in dem zweiten LSP und der Kanalkennung des Kanals der elektrischen Schicht in dem zweiten LSP ist.

2. Verfahren nach Anspruch 1, vor dem Herstellen, durch den ersten Knoten, einer Bindungsbeziehung, des ersten LSP, von Verbindungen zwischen Schichten, das Verfahren ferner Folgendes umfasst:
Bestimmen, durch den ersten Knoten, der ersten Verbindungsinformationen, wenn der erste Knoten ein Kopfknoten ist.

3. Verfahren nach Anspruch 1, wobei die erste LSP-Pfadherstellungs-Anforderungsnachricht ein Kennungsobjekt trägt und das Kennungsobjekt dafür genutzt wird, den ersten Knoten anzuweisen, die Bindungsbeziehung, des ersten LSP, von Verbindungen zwischen Schichten herzustellen und/oder den ersten Knoten anzuweisen, die Bindungsbeziehung, des zweiten LSP, von Verbindungen zwischen Schichten herzustellen.

4. Verfahren nach einem der Ansprüche 1 bis 3, ferner umfassend:
nachdem der erste Knoten die Bindungsbeziehung, des ersten LSP, von Verbindungen zwischen Schichten hergestellt hat, Senden, durch den ersten Knoten, der Bindungsbeziehung, des ersten LSP, von Verbindungen zwischen Schichten, und/oder der Bindungsbeziehung, des zweiten LSP, von Verbindungen zwischen Schichten, an eine Steuerung.

5. Verfahren nach Anspruch 1 oder 2, nach dem Herstellen, durch den ersten Knoten, einer Bindungsbeziehung, des ersten LSP, von Verbindungen zwischen Schichten, das Verfahren ferner Folgendes umfasst:
Bestimmen, durch den ersten Knoten, dass eine Multiplexierungsverbindung in dem ersten LSP fehlerhaft ist, und Bestimmen einer Bindungsbeziehung der fehlerhaften Multiplexierungsverbindung; und
Bestimmen, durch den ersten Knoten auf Grundlage der Bindungsbeziehung, des ersten LSP, von Verbindungen zwischen Schichten, einer Verbindungskennung, die von wenigstens einer Einzelwellenlängen-Verbindung ist und die der Verbindungskennung der fehlerhaften Multiplexierungsverbindung entspricht.

6. Verfahren nach Anspruch 5, nach dem Herstellen, durch den ersten Knoten, einer Bindungsbeziehung, des zweiten LSP, von Verbindungen zwischen Schichten, das Verfahren ferner Folgendes umfasst:
Bestimmen, durch den ersten Knoten auf Grundlage der Bindungsbeziehung, des zweiten LSP, von Verbindungen zwischen Schichten, und der Verbindungskennung, die von der Einzelwellenlängen-Verbindung ist und die der Verbindungskennung der fehlerhaften Multiplexierungsverbindung entspricht, einer Kanalkennung, die von wenigstens einem Kanal einer elektrischen Schicht ist und die einer Verbindungskennung jeder Einzelwellenlängen-Verbindung entspricht.

7. Vorrichtung zur Herstellung einer Bindungsbeziehung von Verbindungen zwischen Schichten, umfassend:
eine Empfangseinheit (1201), die dazu ausgebildet ist, eine erste Pfadherstellungs-Anforderungsnachricht eines "Label Switched Path", LSP, zu empfangen, wobei die erste LSP-Pfadherstellungs-Anforderungsnachricht erste Verbindungsinformationen trägt, und
die ersten Verbindungsinformationen eine Verbindungskennung einer Einzelwellenlängen-Verbindung, die in einem ersten LSP enthalten ist, und eine Verbindungskennung einer Multiplexierungsverbindung, die in dem ersten LSP enthalten ist, umfassen; und
eine Herstellungseinheit (1202), die dazu ausgebildet ist, eine Bindungsbeziehung, des ersten LSP, von Verbindungen zwischen Schichten herzustellen, wobei die Bindungsbeziehung, des ersten LSP, von Verbindungen zwischen Schichten, eine Entsprechung zwischen der Verbindungskennung der Multiplexierungsverbindung in dem ersten LSP und der Verbindungskennung der Einzelwellenlängen-Verbindung in dem ersten LSP ist;
die Empfangseinheit ferner dazu ausgebildet ist, eine zweite LSP-Pfadherstellungs-Anforderungsnachricht zu empfangen, wobei die zweite LSP-Pfadherstellungs-Anforderungsnachricht zweite Verbindungsinformationen trägt, und
die zweiten Verbindungsinformationen eine Verbindungskennung einer Einzelwellenlängen-Verbindung, die in einem zweiten LSP enthalten ist, und eine Kanalkennung eines Kanals einer elektrischen Schicht, der in dem zweiten LSP enthalten ist, umfassen; und
die Herstellungseinheit ferner dazu ausgebildet ist, eine Bindungsbeziehung, des zweiten LSP, von Verbindungen zwischen Schichten herzustellen, wobei die Bindungsbeziehung, des zweiten LSP, von Verbindungen zwischen Schichten eine Entsprechung zwischen der Verbindungskennung der Einzelwellenlängen-Verbindung in dem zweiten LSP und der Kanalkennung des Kanals der elektrischen Schicht in dem zweiten LSP ist.

8. Vorrichtung nach Anspruch 7, wobei die Vorrichtung ferner Folgendes umfasst:
eine Bestimmungseinheit (1203), die ausgebildet ist: bevor die Bindungsbeziehung, des ersten LSP, von Verbindungen zwischen Schichten hergestellt wird, die ersten Verbindungsinformationen zu bestimmen, wenn die Vorrichtung ein Kopfknoten ist.

9. Vorrichtung nach Anspruch 7, wobei die erste LSP-Pfadherstellungs-Anforderungsnachricht ein Kennungsobjekt trägt und das Kennungsobjekt dafür genutzt wird, die Vorrichtung anzuweisen, die Bindungsbeziehung, des ersten LSP, von Verbindungen zwischen Schichten herzustellen und/oder die Vorrichtung anzuweisen, die Bindungsbeziehung, des zweiten LSP, von Verbindungen zwischen Schichten herzustellen.

10. Vorrichtung nach einem der Ansprüche 7 bis 9, wobei die Vorrichtung ferner Folgendes umfasst:
eine Sendeeinheit (1204), die dazu ausgebildet ist: nachdem die Vorrichtung die Bindungsbeziehung, des ersten LSP, von Verbindungen zwischen Schichten hergestellt hat, die Bindungsbeziehung, des ersten LSP, von Verbindungen zwischen Schichten und/oder die Bindungsbeziehung, des zweiten LSP, von Verbindungen zwischen Schichten an eine Steuerung zu senden.

11. Vorrichtung nach Anspruch 7 oder 8, wobei die Vorrichtung ferner Folgendes umfasst:
einer Fehleranalyseeinheit (1205), die dazu ausgebildet ist: nachdem die Vorrichtung die Bindungsbeziehung, des ersten LSP, von Verbindungen zwischen Schichten hergestellt hat, zu bestimmen, dass eine Multiplexierungsverbindung in dem ersten LSP fehlerhaft ist, und eine Verbindungskennung der fehlerhaften Multiplexierungsverbindung zu bestimmen; und
auf Grundlage der Bindungsbeziehung, des ersten LSP, von Verbindungen zwischen Schichten eine Verbindungskennung zu bestimmen, die von wenigstens einer Einzelwellenlängen-Verbindung ist und die der Verbindungskennung der fehlerhaften Multiplexierungsverbindung entspricht.

12. Vorrichtung nach Anspruch 11, wobei die Fehleranalyseeinheit ferner dazu ausgebildet ist: nachdem die Vorrichtung die Bindungsbeziehung, des zweiten LSP, von Verbindungen zwischen Schichten, hergestellt hat, auf Grundlage der Bindungsbeziehung, des zweiten LSP, von Verbindungen zwischen Schichten, und der Verbindungskennung, die von der Einzelwellenlängen-Verbindung ist und die der Verbindungskennung der fehlerhaften Multiplexierungsverbindung entspricht, eine Kanalkennung zu bestimmen, die von wenigstens einem Kanal einer elektrischen Schicht ist und die einer Verbindungskennung jeder Einzelwellenlängen-Verbindung entspricht.

## Revendications

1. Procédé d'établissement d'une relation d'association de liaison intercouche, consistant à :
recevoir (500), par un premier nœud, un premier message de demande d'établissement de chemin à chemin commuté par étiquette (LSP), le premier message de demande d'établissement de chemin LSP transportant une première information de liaison, et la première information de liaison comprenant un identifiant de liaison d'une liaison à longueur d'onde unique comprise dans un premier LSP et un identifiant de liaison d'une liaison de multiplexage comprise dans le premier LSP ; et
établir (510), par le premier nœud, une relation d'association de liaison intercouche du premier LSP,
la relation d'association de liaison intercouche du premier LSP étant une correspondance entre l'identifiant de liaison de la liaison de multiplexage dans le premier LSP et l'identifiant de liaison de la liaison à longueur d'onde unique dans le premier LSP ;
le procédé consistant en outre à :
recevoir, par le premier nœud, un second message de demande d'établissement de chemin LSP, le second message de demande d'établissement de chemin LSP transportant une seconde information de liaison, et
la seconde information de liaison comprenant un identifiant de liaison d'une liaison à longueur d'onde unique comprise dans un second LSP et un identifiant de canal d'un canal de couche électrique compris dans le second LSP ; et
établir, par le premier nœud, une relation d'association de liaison intercouche du second LSP,
la relation d'association de liaison intercouche du second LSP étant une correspondance entre l'identifiant de liaison de la liaison à longueur d'onde unique dans le second LSP et l'identifiant de canal du canal de couche électrique dans le second LSP.

2. Procédé selon la revendication 1, le procédé consistant en outre, avant l'établissement, par le premier nœud, d'une relation d'association de liaison intercouche du premier LSP, à :
déterminer, par le premier nœud, la première information de liaison si le premier nœud est un nœud de tête.

3. Procédé selon la revendication 1, dans lequel le premier message de demande d'établissement de chemin LSP transporte un objet identifiant, l'objet identifiant étant utilisé pour donner l'instruction au premier nœud d'établir la relation d'association de liaison intercouche du premier LSP et/ou pour donner l'instruction au premier nœud d'établir la relation d'association de liaison intercouche du second LSP.

4. Procédé selon l'une quelconque des revendications 1 à 3, consistant en outre à :
après l'établissement, par le premier nœud, de la relation d'association de liaison intercouche du premier LSP, envoyer, par le premier nœud, la relation d'association de liaison intercouche du premier LSP et/ou la relation d'association de liaison intercouche du second LSP à un contrôleur.

5. Procédé selon la revendication 1 ou 2, le procédé consistant en outre, après l'établissement, par le premier nœud, d'une relation d'association de liaison intercouche du premier LSP, à :
déterminer, par le premier nœud, qu'une liaison de multiplexage dans le premier LSP est défectueuse et déterminer un identifiant de liaison de la liaison de multiplexage défectueuse ; et
déterminer, par le premier nœud sur la base de la relation d'association de liaison intercouche du premier LSP, un identifiant de liaison qui est d'au moins une liaison à longueur d'onde unique et qui correspond à l'identifiant de liaison de la liaison de multiplexage défectueuse.

6. Procédé selon la revendication 5, le procédé consistant en outre, après l'établissement, par le premier nœud, d'une relation d'association de liaison intercouche du second LSP, à :
déterminer, par le premier nœud sur la base de la relation d'association de liaison intercouche du second LSP et de l'identifiant de liaison qui est de la liaison à longueur d'onde unique et qui correspond à l'identifiant de liaison de la liaison de multiplexage défectueuse, un identifiant de canal qui est d'au moins un canal de couche électrique et qui correspond à un identifiant de liaison de chaque liaison à longueur d'onde unique.

7. Appareil d'établissement d'une relation d'association de liaison intercouche, comprenant :
une unité de réception (1201), configurée pour recevoir un premier message de demande d'établissement de chemin à chemin commuté par étiquette (LSP), le premier message de demande d'établissement de chemin LSP transportant une première information de liaison, et
la première information de liaison comprenant un identifiant de liaison d'une liaison à longueur d'onde unique comprise dans un premier LSP et un identifiant de liaison d'une liaison de multiplexage comprise dans le premier LSP ; et
une unité d'établissement (1202), configurée pour établir une relation d'association de liaison intercouche du premier LSP,
la relation d'association de liaison intercouche du premier LSP étant une correspondance entre l'identifiant de liaison de la liaison de multiplexage dans le premier LSP et l'identifiant de liaison de la liaison à longueur d'onde unique dans le premier LSP ;
l'unité de réception étant en outre configurée pour recevoir un second message de demande d'établissement de chemin LSP, le second message de demande d'établissement de chemin LSP transportant une seconde information de liaison, et
la seconde information de liaison comprenant un identifiant de liaison d'une liaison à longueur d'onde unique comprise dans un second LSP et un identifiant de canal d'un canal de couche électrique compris dans le second LSP ; et
l'unité d'établissement étant en outre configurée pour établir une relation d'association de liaison intercouche du second LSP,
la relation d'association de liaison intercouche du second LSP étant une correspondance entre l'identifiant de liaison de la liaison à longueur d'onde unique dans le second LSP et l'identifiant de canal du canal de couche électrique dans le second LSP.

8. Appareil selon la revendication 7, l'appareil comprenant en outre :
une unité de détermination (1203), configurée pour : avant l'établissement de la relation d'association de liaison intercouche du premier LSP, déterminer la première information de liaison si l'appareil est un nœud de tête.

9. Appareil selon la revendication 7, dans lequel le premier message de demande d'établissement de chemin LSP transporte un objet identifiant, l'objet identifiant étant utilisé pour donner l'instruction à l'appareil d'établir la relation d'association de liaison intercouche du premier LSP et/ou pour donner l'instruction à l'appareil d'établir la relation d'association de liaison intercouche du second LSP.

10. Appareil selon l'une quelconque des revendications 7 à 9, l'appareil comprenant en outre :
une unité d'envoi (1204), configurée pour : après l'établissement, par l'appareil, de la relation d'association de liaison intercouche du premier LSP, envoyer la relation d'association de liaison intercouche du premier LSP et/ou la relation d'association de liaison intercouche du second LSP à un contrôleur.

11. Appareil selon la revendication 7 ou 8, l'appareil comprenant en outre :
une unité d'analyse de défaut (1205), configurée pour : après l'établissement, par l'appareil, de la relation d'association de liaison intercouche du premier LSP, déterminer qu'une liaison de multiplexage dans le premier LSP est défectueuse et déterminer un identifiant de liaison de la liaison de multiplexage défectueuse ; et
déterminer, sur la base de la relation d'association de liaison intercouche du premier LSP, un identifiant de liaison qui est d'au moins une liaison à longueur d'onde unique et qui correspond à l'identifiant de liaison de la liaison de multiplexage défectueuse.

12. Appareil selon la revendication 11, dans lequel l'unité d'analyse de défaut est en outre configurée pour : après l'établissement, par l'appareil, de la relation d'association de liaison intercouche du second LSP, déterminer, sur la base de la relation d'association de liaison intercouche du second LSP et de l'identifiant de liaison qui est de la liaison à longueur d'onde unique et qui correspond à l'identifiant de liaison de la liaison de multiplexage défectueuse, un identifiant de canal qui est d'au moins un canal de couche électrique et qui correspond à un identifiant de liaison de chaque liaison à longueur d'onde unique.
